# EUROPÄISCHE PATENTANMELDUNG

(11) **EP 4 417 381 A1**
(43) Veröffentlichungstag der Anmeldung: **21.08.2024**
(21) Anmeldenummer: 24156604.1
(22) Anmeldetag: 08.02.2024
(51) Int. Cl.: B25J 21/02, B65B 1/28

(54) **ANSCHLUSSVORRICHTUNG**

(30) Priorität: 15.02.2023 DE 102023103705; 04.04.2023 DE 102023108658
(71) Anmelder: Hecht Technologie GmbH, 85276 Pfaffenhofen (DE)
(72) Erfinder: Haußmann, Matthias, 85276 Pfaffenhofen/Ilm (DE); Schwaiger, Thomas, 85276 Pfaffenhofen/Ilm (DE); Heinzinger, Josef, 85276 Pfaffenhofen/Ilm (DE)
(74) Vertreter: Kilian Kilian & Partner mbB

(57) **Zusammenfassung**

Die Erfindung betrifft eine Anschlussvorrichtung (2) zum Anschließen eines ein pulver-/granulatförmiges Produkt enthaltenden Behälters (F) an einen Isolator (1) mit einer Anschlussöffnung (120), durch welche der Behälter (F) zum Entleeren bestimmungsgemäß in den Isolator (1) eingeführt wird, wobei die Anschlussvorrichtung (2) aufweist:
eine Halterungseinrichtung (220), welche eingerichtet ist, den Behälter (F) aufzunehmen und während des Anschließens und des Entleerens zu halten;
eine Versetzeinrichtung (210, 230) zum Versetzen der Halterungseinrichtung (220); und
eine Steuereinrichtung zur Steuerung der Versetzeinrichtung (210, 230); wobei
die Steuereinrichtung eingerichtet ist, die Versetzeinrichtung (210, 230) derart anzusteuern, dass sie die Halterungseinrichtung (220) zusammen mit dem Behälter (F) ausgehend von einer anfänglichen Halterungsposition, in welcher der Behälter (F) bestimmungsgemäß in der Halterungseinrichtung (220) aufgenommen ist, so in eine Entleerungsposition versetzt, dass zumindest eine Öffnung des Behälters (F), über welche das pulver-/granulatförmige Produkt zur Entleerung des Behälters (F) bestimmungsgemäß entnommen wird, durch die Anschlussöffnung (120) in den Isolator (1) eingeführt ist.

## Beschreibung

Die vorliegende Erfindung betrifft eine Anschlussvorrichtung zum Anschließen eines ein pulver-/granulatförmiges Produkt enthaltenden Behälters an einen Isolator, einen entsprechenden Isolator sowie ein entsprechendes Verfahren zum Anschließen eines entsprechenden Behälters an einen entsprechenden Isolator.

Anschlussvorrichtungen zum Anschließen von Behältern, die pulver-/granulatförmige Produkte enthalten, sowie entsprechende Isolatoren sind allgemein bekannt.

Der Anschluss der Behälter erfolgt bei solchen Anschlussvorrichtungen in der Regel dadurch, dass ein schlauchförmiger Auslauf des Behälters oder ein gesonderter für den Anschluss vorgesehener und an dem Behälter befestigter Folienschlauch an der Anschlussvorrichtung festgeklemmt wird. Anschließend wird das pulver-/granulatförmige Produkt über den schlauchförmigen Auslauf bzw. den Folienschlauch überführt, d. h. entweder in den Behälter gefüllt oder aus diesem entleert werden.

Nach Überführung des Produktes bindet ein Anwender den schlauchförmigen Auslauf bzw. den Folienschlauch zweifach ab und durchtrennt diesen anschließend. Der an der Anschlussvorrichtung verbleibende Folienrest muss bei dem erneuten Anschluss eines weiteren Behälters entfernt werden. Dies erfolgt beispielsweise über hierfür gesonderte vorgesehene seitliche Eingriffe.

Der erläuterte Ablauf verhindert, dass ein Anwender mit dem Produkt oder - vize versa - das Produkt mit der Außenumgebung in Kontakt kommt, und eignet sich deshalb insbesondere für Fälle, in denen gesundheitsgefährdende Produkte gehandhabt oder Kreuzkontaminationen verhindert werden müssen.

Darüber hinaus erfolgt der Anschluss der Behälter an die Anschlussvorrichtung sowie die Handhabung des Behälters zumeist manuell bzw. teilautomatisiert. Dies ist einerseits aufgrund der hohen Gewichte der gefüllten Behälter und andererseits hinsichtlich der Gefahr, während der Handhabung des Behälters mit dem Produkt in Kontakt zu gelangen, kritisch in Bezug auf die Arbeitssicherheit zu bewerten. Darüber hinaus ist die manuelle Handhabung zeitintensiv, sodass die Anzahl der handhabbaren, d.h. zu entleerenden Behälter pro Zeiteinheit abnimmt.

Vor obigem Hintergrund ist es Aufgabe der vorliegenden Erfindung, eine Anschlussvorrichtung zum Anschließen eines ein pulver-/granulatförmiges Produkt enthaltenden Behälters an eine Einrichtung, wie beispielsweise einen Isolator, mit hohem Automatisierungsgrad zu schaffen, die eine schnelle und kontaminationsfreie Handhabung von Behältern ermöglicht.

Der bevorzugte Kerngedanke der Erfindung liegt dabei in der vorliegenden Anmeldung in der Automation des Anschlussvorganges.

Die Aufgabe der Erfindung wird durch eine Anschlussvorrichtung gemäß Patentanspruch 1 sowie ein Verfahren zum Anschließen eines ein pulver-/granulatförmiges Produkt enthaltenden Behälters gemäß Patentanspruch 11 gelöst. Bevorzugte Ausführungsformen der Erfindung sind Gegenstand der Unteransprüche.

*Eine erfindungsgemäße Anschlussvorrichtung zum Anschließen eines ein pulver-*/*granulatförmiges Produkt enthaltenden Behälters an einen Isolator mit einer Anschlussöffnung, durch welche der Behälter zum Entleeren bestimmungsgemäß in den Isolator eingeführt wird, weist auf:*
*eine Halterungseinrichtung, welche eingerichtet ist, den Behälter aufzunehmen und während des Anschließens und des Entleerens zu halten;*
*eine Versetzeinrichtung zum Versetzen der Halterungseinrichtung; und*
*eine Steuereinrichtung zur Steuerung der Versetzeinrichtung; wobei*
*die Steuereinrichtung eingerichtet ist, die Versetzeinrichtung derart anzusteuern, dass sie die Halterungseinrichtung zusammen mit dem Behälter ausgehend von einer anfänglichen Halterungsposition, in welcher der Behälter bestimmungsgemäß in der Halterungseinrichtung aufgenommen ist, so in eine Entleerungsposition versetzt, dass zumindest eine Öffnung des Behälters, über welche das pulver-*/*granulatförmige Produkt zur Entleerung des Behälters bestimmungsgemäß entnommen wird, durch die Anschlussöffnung in den Isolator eingeführt ist.*

Die Halterungseinrichtung weist vorzugsweise ein Befestigungsmittel auf, über welche der Behälter in der Halterungseinrichtung fixierbar ist.

Die Versetzeinrichtung ist vorzugsweise eingerichtet, die Halterungseinrichtung gegenüber der Anschlussöffnung zu verfahren und/oder zu verkippen. Insbesondere kann die Versetzeinrichtung die Halterungseinrichtung entlang einer Längsachse des Behälters verfahren.

Der genannte Behälter ist vorzugsweise ein mit dem Produkt gefülltes Fass, wobei die Öffnung einen oberen Abschnitt des Fasses, auf dem ein Deckel des Fasses lagert, definiert. Der Deckel kann zum Öffnen des Fasses von der Öffnung des Fasses entfernt werden.

Die Anschlussöffnung ist vorzugsweise an der hinteren Seite eines Isolators gebildet, in welchen der Behälter zum Entleeren bestimmungsgemäß eingeführt wird. Weiterhin ist ein Durchmesser der Anschlussöffnung vorzugsweise größer als ein Durchmesser der Öffnung des Fasses.

Die Entleerungsposition ist vorzugsweise eine Position, in welcher der Behälter/das Fass zumindest abschnittsweise in einem Innenraum des Isolators aufgenommen ist.

Indem der gesamte Versetzungsprozess ausgehend von der anfänglichen Halterungsposition bis zur Entleerungsposition unter Ansteuerung der Steuereinrichtung vollzogen wird, erfolgt das Anschließen des Behälters an die Anschlussöffnung in der erfindungsgemäßen Anschlussvorrichtung automatisiert. Auf diese Weise, ist eine Anwesenheit des Anwenders in direkter Nähe zum Behälter während des Anschließens nicht erforderlich. Damit ist eine Wahrscheinlichkeit, dass der Anwender mit dem Produkt in Kontakt gelangt, gegenüber manuellen oder teilautomatisierten Konzepten zumindest reduziert.

*Bevorzugt durchläuft die Halterungseinrichtung beim Versetzen eine Zwischenposition. An der Halterungseinrichtung ist bevorzugt eine Absaugeinrichtung vorgesehen, welche eingerichtet ist, einen Bereich um die Öffnung des Behälters während des Versetzens von der anfänglichen Halterungsposition in die Zwischenposition abzusaugen, sodass aus dem Behälter austretendes pulver-*/*granulatförmiges Produkt abgesaugt wird.*

Die genannte Zwischenposition ist vorzugsweise eine Position, an der das Versetzen des Fasses pausiert wird, um Zwischenprozesse im Zusammenhang mit der/dem automatisierten Zuführung/Anschließen des Fasses in/an den Isolator auszuführen.

Die Absaugeinrichtung ist vorzugsweise an die Geometrie des Behälters angepasst. Insbesondere folgt die Absaugeinrichtung vorzugsweise einer Kontur einer äußeren Wandung des Behälters im Bereich der Öffnung des Behälters.

Bevorzugt umläuft/umschließt die Absaugeinrichtung die äußere Wandung des Behälters im Bereich der Öffnung des Behälters vollständig oder zumindest teilweise.

Indem die Absaugeinrichtung im Bereich der Öffnung des Behälters vorgesehen ist, kann das Produkt, welches während des Versetzens aus dem Behälter austritt, abgesaugt werden. Auf diese Weise wird die Wahrscheinlichkeit, dass Produkt in die Außenumgebung gelangt und in der Folge mit dem Anwender in Kontakt kommt, zumindest reduziert werden.

Die Absaugeinrichtung ist vorzugsweise eingerichtet, den Bereich um die Öffnung des Behälters kontinuierlich während des Versetzens abzusaugen.

*Bevorzugt ist die Absaugeinrichtung in Bezug auf die Halterungseinrichtung derart gelagert, dass die Absaugeinrichtung und die Halterungseinrichtung bzw. der Behälter beim Versetzen von der Zwischenposition in die Entleerungsposition eine Relativbewegung zueinander ausführen, sodass sich die Absaugeinrichtung von dem Bereich um die Öffnung des Behälters entfernt.*

Vorzugsweise führt die Absaugeinrichtung die Relativbewegung in einer Richtung entgegengesetzt zu einer Richtung, in welcher der Behälter versetzt wird, durch.

Vorzugsweise weist der Isolator einen Anschlag auf, an welchen die Absaugeinrichtung beim Versetzen von der Zwischenposition in die Entleerungsposition anschlägt. Weiterhin ist die Absaugeinrichtung vorzugsweise beweglich gegenüber der Halterungseinrichtung gelagert, so dass die Absaugeinrichtung in Folge des Anschlagens die Relativbewegung gegenüber der Halterungseinrichtung und somit gegenüber dem Behälter ausführen kann.

Aufgrund der Relativbewegung kann die Absaugeinrichtung bei Versetzen der Öffnung des Behälters von der Zwischenposition in die Entleerungsposition von dem Bereich um die Öffnung des Behälters entfernt werden. Somit saugt die Absaugeinrichtung den Bereich um die Öffnung des Fasses bevorzugt so lange ab, bis dieser die Anschlussöffnung des Isolators erreicht/überschreitet.

*Bevorzugt weist die Anschlussvorrichtung ferner eine von der Steuereinrichtung angesteuerte Deckelversetzeinrichtung auf, welche eingerichtet ist, einen den Behälter verschließenden Deckel derart zu versetzen, dass der Behälter spätestens in der Zwischenposition in einem geöffneten Zustand vorliegt.*

*Bevorzugt ist an der Halterungseinrichtung eine Fixiereinrichtung vorgesehen, welche eingerichtet ist, den Deckel während des Versetzens an dem Behälter zu fixieren.*

Zum Entfernen des Deckels im Zuge der/dem automatisierten Zuführung/Anschließen des Fasses ist es bevorzugt, dass dieser vor Beginn des Zuführens/Anschließens vorgelöst wird. Die Fixiereinrichtung kann folglich vorgesehen werden, um den Deckel während des Anschließens/Versetzens an der Öffnung des Fasses zu fixieren/halten.

*Bevorzugt weist die Deckelversetzeinrichtung eine Greifeinrichtung auf, welche eingerichtet ist, den Deckel in einer Greifposition zu greifen und den Deckel greifend derart in einen versetzten Zustand zu versetzen, dass der Behälter in dem geöffneten Zustand vorliegt.*

*Bevorzugt weist die Greifeinrichtung eine Aufnahmeplatte auf, welche eingerichtet ist, die Anschlussöffnung des Isolators in der Greifposition zu verschließen und bei Versetzen des Deckels in den versetzten Zustand zum Einführen des Behälters freizugeben.*

Die Deckelversetzeinrichtung bildet somit gleichzeitig eine Schleuse für die Anschlussöffnung des Isolators aus.

Insbesondere kann die Aufnahmeplatte der Greifeinrichtung vorzugsweise in eine Ausgangsposition versetzt werden, in der die Aufnahmeplatte die Anschlussöffnung des Grundkörpers in der Ausgangsposition zumindest abschnittsweise abdeckt. Vorzugsweise kann in der Ausgangsposition ein Spalt zwischen der Aufnahmeplatte und der Anschlussöffnung gebildet bzw. vorgesehen sein. Über jenen Spalt kann aufgrund des geringeren Umgebungsdrucks im Innenraum des Grundkörper ein in den Innenraum des Grundkörpers gerichteter Luftstrom erzeugt werden, der einem Austreten von Produkt aus dem Innenraum in die Außenumgebung entgegenwirkt oder jenes zumindest reduziert.

*Bevorzugt umfasst die Steuereinrichtung eine Bedieneinrichtung mit einem Betätigungselement, welche erfordert, dass ein Bediener das Bedienelement beim Ansteuern der Versetzungseinrichtung kontinuierlich hält.*

Auf diese Weise wird sichergestellt, dass der Anwender während des Ansteuerns der Versetzeinrichtung nicht in die Anschlussvorrichtung eingreifen kann. Darüber hinaus ist die Bedieneinrichtung vorzugsweise von der Anschlussvorrichtung beabstandet, so dass die Wahrscheinlichkeit, dass der Anwender mit dem Produkt in Kontakt gelangt, reduziert werden kann. Ein Beispiel für eine entsprechende Bedieneinrichtung ist eine Zweihandsteuerung.

*Bevorzugt weist die Anschlussvorrichtung ferner eine an der Anschlussöffnung, durch welche der Behälter zum Entleeren bestimmungsgemäß in den Isolator eingeführt wird, angeordnete Dichteinrichtung auf, welche eingerichtet ist, einen Spalt zwischen der Anschlussöffnung und dem Behälter beim oder nach Einführen des Behälters derart abzudichten, dass ein Austreten des pulver-*/*granulatförmigen Produkts aus dem Isolator während des Entleerens verhindert wird.*

Die Dichteinrichtung ist vorzugsweise eingerichtet, den durch die unterschiedlichen Durchmesser der Anschlussöffnung und des Fasses gebildeten Spalt zu verschließen.

Bevorzugt wird der Spalt zwischen dem Behälter und der Anschlussöffnung nach/bei Erreichen der Entleerungsposition abgedichtet.

Bevorzugt kann somit ein automatisiertes Zuführen/Anschließen des Fasses bis zum Erreichen eines abgedichteten Zustands bereitgestellt werden.

*Der erfindungsgemäße Isolator weist die erfindungsgemäße Anschlussvorrichtung auf.*

Isolatoren sind vorzugsweise eingerichtet, um Stoffe, die giftige oder gesundheitsgefährdende Eigenschaften aufweisen, handhaben zu können. Solche Isolatoren weisen vorzugsweise Handschuheingriffe in einen aus Metall und/oder Kunststoff gebildeten Grundkörper auf, über die ein Anwender im Innenraum des Isolators bestimmte Tätigkeiten durchführen kann, ohne mit den gehandhabten Stoffen direkt in Berührung zu kommen.

*Das erfindungsgemäße Verfahren zum Anschließen eines ein pulver-*/*granulatförmiges Produkt enthaltenden Behälters an einen Isolator mit einer Anschlussöffnung, durch welche der Behälter zum Entleeren bestimmungsgemäß in den Isolator eingeführt wird, weist die folgenden Schritte auf:*
*Aufnehmen und Halten des Behälters in einer anfänglichen Halterungsposition;*
*Versetzen des Behälters von der anfänglichen Halterungsposition in eine Zwischenposition, wobei ein Bereich um die Öffnung des Behälters derart abgesaugt wird, dass ein Austreten des pulver-*/*granulatförmigen Produkts während des Versetzens verhindert wird;*
*Versetzen des Behälters von der Zwischenposition in eine Entleerungsposition derart, dass zumindest die Öffnung des Behälters in den Isolator eingeführt wird, wobei ein Spalt zwischen dem Behälter und der Anschlussöffnung derart abgedichtet wird, dass ein Austreten des pulver-*/*granulatförmigen Produkts aus dem Isolator verhindert wird.*

Weitere bevorzugte Merkmale der Vorrichtungen sowie des Verfahrens sind im Rahmen der Ausführungsform beschrieben.

Im Folgenden werden bevorzugte Ausführungsformen unter Bezug auf die beigefügten Figuren erläutert.
**Figur 1** zeigt eine perspektivische Ansicht eines Isolators gemäß einer Ausführungsform der Erfindung mit einer erfindungsgemäßen Anschlussvorrichtung.
**Figur 2** zeigt eine weitere perspektivische Ansicht des Isolators gemäß der Ausführungsform der Erfindung mit der Anschlussvorrichtung gemäß einer Ausführungsform der Erfindung.
**Figur 3** zeigt eine schematische Ansicht einer Halterungseinrichtung gemäß einer Ausführungsform der Erfindung.
**Figuren 4** **A bis C** veranschaulichen den Aufbau sowie die Funktionsweise einer Fixiereinrichtung gemäß einer Ausführungsform Erfindung.
**Figuren 5** **A bis C** zeigen Zustände, welche durch Zusammenwirken einer Behälterversetzeinrichtung und einer Halterungseinrichtung gemäß einer Ausführungsform der Erfindung erreicht werden können.
**Figuren 6** **A bis C** veranschaulichen den Aufbau sowie die Funktionsweise einer Deckelversetzeinrichtung gemäß einer Ausführungsform der Erfindung.
**Figuren 7** **A und B** veranschaulichen den Aufbau sowie die Funktionsweise einer Dichteinrichtung gemäß einer Ausführungsform der Erfindung.
**Figuren 8** **A bis I** zeigen ein Verfahren zum Anschließen/Abdocken des Fasses an/von den/dem Isolator unter Verwendung der erfindungsgemäßen Anschlussvorrichtung.

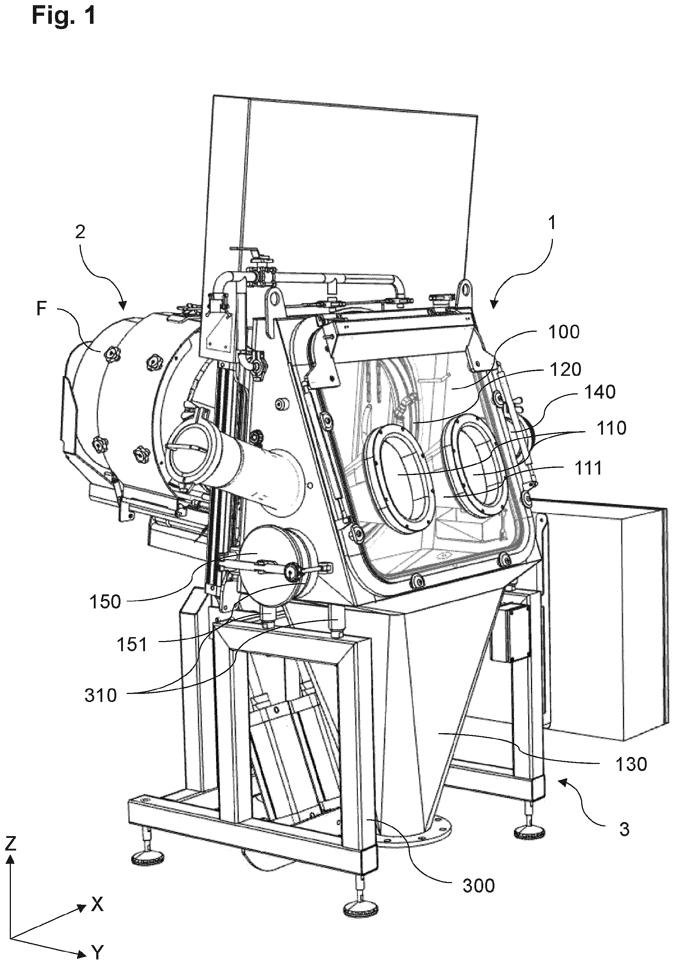

Figur 1 zeigt eine perspektivische Ansicht eines Isolators 1 gemäß einer Ausführungsform der Erfindung mit einer erfindungsgemäßen Anschlussvorrichtung 2.

Die in Figur 1 gezeigte Z-Richtung entspricht einer Höhenrichtung des Isolators 1, wobei eine Höhe h des Isolators 1 bevorzugt in einem Bereich von 220cm bis 260cm liegt, bevorzugt 250cm beträgt; die in Figur 1 gezeigte X-Richtung entspricht der Breitenrichtung des Isolators 1, wobei eine Breite b des Isolators 1 bevorzugt in einem Bereich zwischen 140cm bis 180cm liegt, bevorzugt 160cm beträgt; und die in Figur 1 gezeigte Y-Richtung entspricht der Tiefenrichtung des Isolators 1, wobei eine Tiefe t des Isolators 1 bevorzugt in einem Bereich zwischen 120cm bis 160cm liegt, bevorzugt 140cm beträgt.

Der Isolator 1 weist einen im wesentlichen quaderförmigen Grundkörper 100 auf. Der Grundkörper 100 umfasst an einer vorderen Seite vorzugsweise zwei Eingriffe 110 in den Grundkörper 100, über die der Anwender bestimmte Tätigkeiten in einem Innenraum des Grundkörpers 100 durchführen kann, ohne dass eine Kontaminationsgefahr des Produktes oder des Anwenders besteht. In der gezeigten Ausführungsform sind die Eingriffe 110 als Handschuhe ausgebildet. Die Handschuhe sind vorzugsweise derart mit dem Grundkörper 100 verbunden, dass der Anwender den gesamten Arm in die Handschuhe einführen und somit in den Innenraum des Grundkörper 100 eingreifen kann, um einen gewünschten Bereich zu erreichen. Bevorzugt weist der Grundkörper 100 an der vorderen Seite weiterhin ein Sichtfenster 111 auf, damit der Anwender seine Tätigkeiten im Innenraum beobachten kann.

Auf einer der vorderen Seite gegenüberliegenden hinteren Seite des Grundkörpers 100 ist eine Anschlussöffnung 120 gebildet. Die Anschlussöffnung 120 dient bevorzugt dazu, einen Behälter F bestimmungsgemäß in den Innenraum des Grundkörpers 100 einzuführen. Bei dem Behälter F handelt es sich vorzugsweise um ein Fass F, welches beispielsweise pulver- und/oder granulatförmiges Produkt enthält. Bevorzugt kann dieses Produkt bei Freisetzung eine potentielle Gefährdung für den Anwender und die Umwelt darstellen. Alternativ kann es vorzugsweise erforderlich sein, dass das Produkt selbst für die Weiterverarbeitung einen bestimmten Reinheitsgrad aufweist. Aus oben genannten Gründen ist es somit bevorzugt, dass das Produkt dem Fass F kontaminationsfrei zugeführt/entnommen wird. Das Fass F umfasst vorzugsweise einen Deckel D, welcher über eine Schelle an einer Öffnung des Fasses F befestigt sein kann. Zudem kann zwischen dem Fass F und dem Deckel D eine klebende Dichtung vorgesehen sein. Darüber hinaus kann das pulver- und/oder granulatförmige Produkt innerhalb des Fasses F nochmals in einen versiegelten Foliensack eingeschlossen sein.

An einer unteren Seite des Grundkörpers 100 ist vorzugsweise eine im wesentlichen rohrförmige, nach unten konisch zulaufende Produktführung 130 vorgesehen, über welche der Isolator 1 an eine nicht gezeigte Produktionsanlage angeschlossen ist. Auf diese Weise kann das pulver-/granulatförmige Produkt nach Entnahme aus dem Fass F innerhalb des Isolators 1 zur Weiterverarbeitung der Produktionsanlage zugeführt werden.

Weiterhin ist an dem Grundkörper 100 auf einer rechten Seite (in Figur 1 die in Bezug auf die Breitenrichtung X abgewandte Seite) vorzugsweise ein Pumpenanschluss 140 vorgesehen. Über diesen kann Luft/Atmosphäre aus dem Innenraum des Grundkörpers 100 abgeführt werden, so dass im Innenraum des Grundkörpers 100 ein geringerer Umgebungsdruck als in der Außenumgebung des Isolators 1 erzeugt wird. Bevorzugt ist an den Pumpenanschluss eine nicht gezeigte Vakuumpumpe angeschlossen, über die Luft aus dem Innenraum des Grundkörpers 100 entnommen wird. Weiterhin ist vorzugsweise ein HEPA-Filter (High Efficiency Particulate Airfilter) an dem Pumpenanschluss 140 vorgesehen, über welchen entnommene Luft gefiltert wird. So kann sichergestellt werden, dass pulver- und/oder granulatförmiges Produkt, welches während der Handhabung/Entleerung des Fasses F im Innenraum des Grundkörpers 100 freigesetzt wird, abgesaugt wird und nicht an die Außenumgebung gelangt. Vorzugsweise ist an dem Grundkörper 100 weiterhin eine nicht gezeigte mit dem Innenraum verbundene Luftzufuhr vorgesehen. Die Luftzufuhr ist vorzugsweise eingerichtet, dem Innenraum des Grundkörpers 100 bevorzugt gefilterte Frischluft zuzuführen. Vorzugsweise ist die Luftzufuhr darüber hinaus von dem Pumpenanschluss 140 beabstandet, so dass im Zusammenspiel der Luftzufuhr und des Pumpenanschlusses 140 eine bevorzugt kontinuierliche Luftströmung innerhalb des Innenraums des Grundkörpers 100 erzeugt werden kann.

Auf einer linken Seite des Grundkörpers (in Figur 1 die in Bezug auf die Breitenrichtung X zugewandte Seite) ist bevorzugt ein Abfallabschnitt 150 ausgebildet. Der Abfallabschnitt 150 bildet vorzugsweise einen Durchgang und ist einerseits mit dem Innenraum des Grundkörpers 100 verbunden und weist andererseits eine Öffnung mit einem Befestigungsmechanismus 151 auf. An dem Befestigungsmechanismus ist es vorzugsweise möglich, einen in Figur 1 nicht gezeigten Abfallbehälter zu befestigen. Der Abfallbehälter ist bevorzugt ein flexibler Abfallsack, der mittels des Befestigungsmechanismus 151 festgeklemmt wird. Der Anwender kann somit vorzugsweise nach Entleeren des innerhalb des Fasses F aufgenommenen das pulver- und/oder granulatförmiges Produkt umschließenden Foliensacks eben jenen entleerten Foliensack über den Abschlussanschluss 150 entsorgen.

Bevorzugt wird der Isolator 1 mit einem Gestell 3 an einem gewünschten Ort aufgestellt. In der in Figur 1 dargestellten Ausführungsform wird das Gestell 3 im Wesentlichen durch einen Rahmen 300 aus Hohlprofilen aus Normalstahl oder Edelstahl gebildet. Der Rahmen 300 umfasst vorzugsweise Befestigungsvorrichtungen 310, an denen der Grundkörper 100 über Befestigungsmittel an dem Rahmen 300 befestigt werden kann.

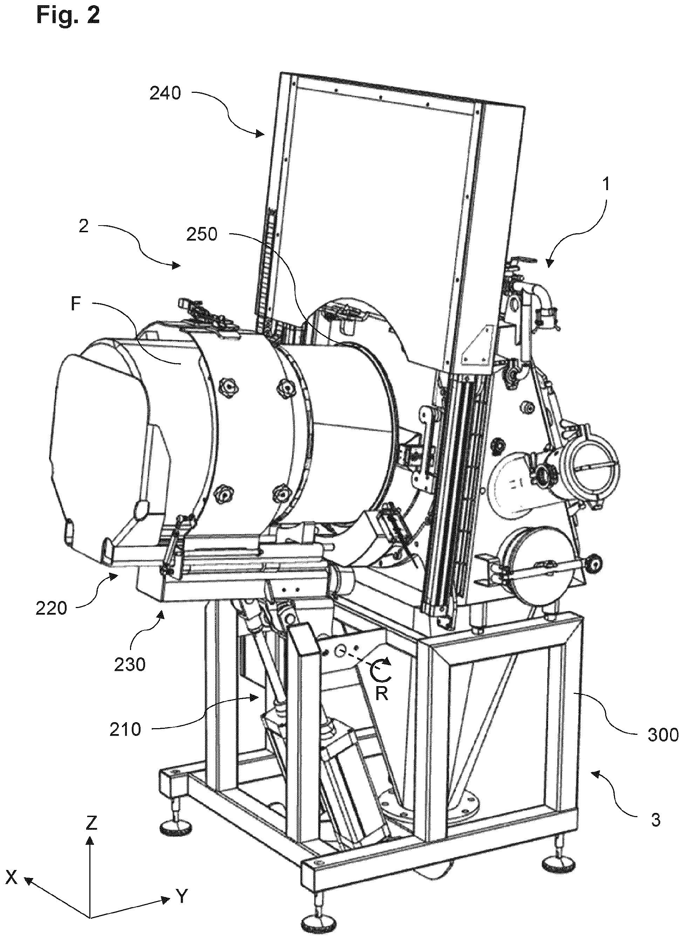

Figur 2 zeigt eine weitere perspektivische Ansicht des Isolators 1 gemäß der Ausführungsform der Erfindung mit der erfindungsgemäßen Anschlussvorrichtung 2.

In der nachfolgenden Beschreibung wird die konstruktive Ausgestaltung eben jener Anschlussvorrichtung 2 detailliert erläutert. Die in Figur 2 gezeigte Anschlussvorrichtung 2 umfasst vorzugsweise eine Hubeinrichtung 210, eine Halterungseinrichtung 220, eine Behälterversetzeinrichtung 230, eine Deckelversetzeinrichtung 240, eine Dichteinrichtung 250 sowie eine nicht einsehbare Abblaseinrichtung 260. Insbesondere die Dichteinrichtung 250 und die Abblaseinrichtung sind im Zusammenhang mit der vorliegenden Anmeldung bevorzugte Merkmale, welche einem kontaminationsfreien Anschließen zugutekommen. Die Hubeinrichtung 210, die Halterungseinrichtung 220, die Behälterversetzeinrichtung 230 und die Deckelversetzeinrichtung 240 sind hingegen insbesondere vorteilhaft im Zusammenhang mit der Verwirklichung eines vollautomatisierten Anschlussvorganges, so dass diese Merkmale den Kern der vorliegenden Anmeldung widerspiegeln.

Die Hubeinrichtung 210 wird in der gezeigten Ausführungsform vorzugsweise durch zwei Pneumatikzylinder 211 und 212 gebildet. Die Pneumatikzylinder 211 und 212 sind über eine nicht gezeigte Steuereinrichtung ansteuerbar. Die Hubeinrichtung 210 ist nicht auf die Anzahl von zwei Pneumatikzylindern eingeschränkt. So können alternativ auch mehrere, beispielsweise drei oder vier, Pneumatikzylinder oder lediglich ein Pneumatikzylinder vorgesehen sein.

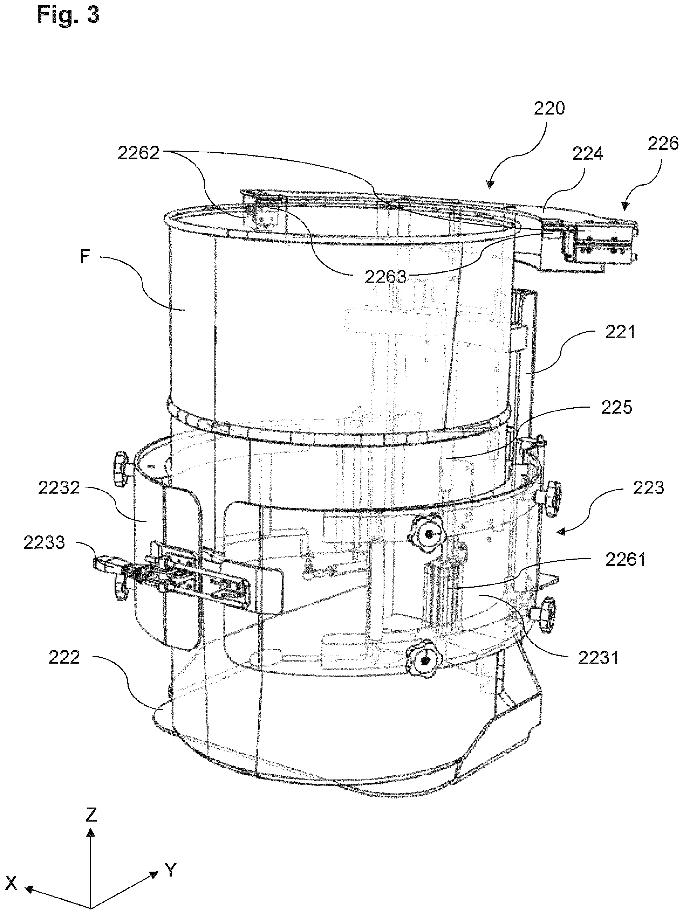

Jeweils ein erstes Ende der Pneumatikzylinder 211 und 212 ist vorzugsweise über Befestigungselemente in drehbarer Weise an dem Rahmen 300 des Gestells 3 befestigt. Das jeweils andere Ende ist vorzugsweise in ebenfalls drehbarer Weise mit der Behälterversetzeinrichtung 230 verbunden. Die Behälterversetzeinrichtung 230 ist selbst ebenfalls drehbar am Rahmen 300 gelagert. Die entsprechende Drehachse R der Behälterversetzeinrichtung 230 ist in Figur 3 anhand einer gestrichelten Linie hervorgehoben.

Die Behälterversetzeinrichtung 230 ist zudem mit der Halterungseinrichtung 220 verbunden. Die Eigenschaften und Funktionen der Behälterversetzeinrichtung 230 werden im späteren Verlauf der Beschreibung ausführlich erläutert

Durch Ansteuern der Pneumatikzylinder 211 und 212 über die Steuereinrichtung können die Behälterversetzeinrichtung 230 und die Halterungseinrichtung 220 vorzugsweise zwischen einer anfänglichen Halterungsposition, in welcher das Fass F, vorzugsweise in aufrechter Position, bestimmungsgemäß in der Halterungseinrichtung 220 aufgenommen wird, und einer verkippten Position, in welcher das Fass F derart versetzt/verkippt ist, dass die Öffnung des Fasses F der Anschlussöffnung 120 des Isolators 1 zugewandt ist, verstellt bzw. versetzt werden. Figur 2 veranschaulicht die verkippte Position.

Figur 3 zeigt eine schematische Ansicht der isolierten Halterungseinrichtung 220 in der anfänglichen Aufnahmeposition mit dem aufgenommenen Fass F. Die Halterungseinrichtung 220 ist ausgebildet das Fass F aufzunehmen und während des Anschließens an die Anschlussöffnung 120 des Grundkörpers 100 des Isolators 1 und des Überführens/Entleerens des pulver- und/oder granulatförmigen Produkts in den Innenraum des Grundkörpers 100 zu halten.

Die Halterungseinrichtung 220 umfasst in der gezeigten Ausführungsform eine Basis 221, welche sich entlang der Längsachse des aufzunehmenden Fasses F erstreckt.

Zur Aufnahme des Fasses F in der Halterungseinrichtung 220 sind an der Basis 221 vorzugsweise eine Aufnahmeplatte 222 und eine Fassklemmung 223 vorgesehen. Die Aufnahmeplatte 222 ist vorzugsweise an einem bezüglich des Grundkörpers 100 des Isolators 1 distalen Ende der Basis 221 angeordnet. In der gezeigten anfänglichen Halterungsposition ist die Aufnahmeplatte 222 vorzugsweise im Wesentlichen parallel zum Boden, auf welchem das Gestell 3 steht, ausgerichtet oder liegt auf eben jenem Boden auf. Das Fass F kann so in aufrechter Position mit dem Fassboden auf die Aufnahmeplatte 211 gestellt werden. Die Fassklemmung 223 umfasst vorzugsweise einen ersten Flügel 2231 und einen zweiten Flügel 2232, wobei der erste Flügel 2231 in der Figur 3 dem Betrachter zugewandt ist und zur besseren Veranschaulichung des konstruktiven Aufbaus der Halterungseinrichtung 220 transparent dargestellt ist. Die Flügel 2231 und 2232 sind vorzugsweise jeweils drehbar an der Basis 221 gelagert und können zum Aufnehmen des Fasses F in die Halterungseinrichtung 220 derart verschwenkt/aufgespreizt werden, dass das Fass F auf die Aufnahmeplatte 222 gestellt/geschoben werden kann. Anschließend können die Flügel 2231 und 2232 derart zurückgeschwenkt werden, dass diese an einer äußeren Wandung des Fasses F anliegen. In dieser Position können die Flügel 2231 und 2232 daraufhin über einen Spannhebel 2233 vorzugsweise derart verspannt werden, dass das Fass F innerhalb der Halterungseinrichtung 220 fixiert wird.

Weiterhin umfasst die Halterungseinrichtung 220 vorzugsweise eine Absaugeinrichtung 224. Die Absaugeinrichtung 240 ist vorzugsweise an einem bezüglich des Grundkörpers 100 des Isolators 1 proximalen Ende der Basis 221 angeordnet. Die Absaugeinrichtung 224 ist vorzugsweise vorgesehen, um pulver-/granulatförmiges Produkt, welches aus dem Fass F austritt, während dieses in der Halterungseinrichtung 220 aufgenommen ist, abzusaugen. Diesbezüglich ist an der Absaugeinrichtung 224 vorzugsweise ein nicht gezeigter Pumpenanschluss vorgesehen, welcher ebenfalls mit einer Vakuumpumpe verbunden ist. Vorzugsweise kann die Absaugeinrichtung 224 über dieselbe Vakuumpumpe betrieben werden, welche im Zusammenhang mit der Absaugung am Pumpenanschluss 140 im Grundkörper 100 des Isolators 1 benannt wurde.

Vorzugsweise ist die Absaugeinrichtung 224 in einem Bereich um die Öffnung/den oberen Rand des Fasses F angeordnet. Im konkret dargestellten Fall ist die Absaugeinrichtung 224 durch ein Gehäuse gebildet, welches eine der Wandung des Fasses F zugewandte Absaugöffnung aufweist. Weiterhin ist das Gehäuse der Absaugeinrichtung 224 vorzugsweise im Wesentlichen sichel- bzw. halbmondförmig ausgebildet, sodass die Absaugöffnung zumindest abschnittsweise der Kontur der äußeren Wandung des Fasses F folgt. Darüber hinaus ist die Absaugeinrichtung 224 vorzugsweise derart in Bezug auf eine Längsachse des Fasses F angeordnet, dass in verkippter Position der Halterungseinrichtung 220 die Absaugöffnung in Z-Richtung unterhalb des Fasses F angeordnet ist. Auf diese Weise wird eine Wahrscheinlichkeit erhöht, dass aus dem Fass F austretendes Pulver von der Absaugeinrichtung 224 abgesaugt werden kann.

Die Absaugeinrichtung 224 ist darüber hinaus vorzugsweise beweglich gegenüber der übrigen Halterungseinrichtung 220 gelagert. Diesbezüglich sind an der Halterungseinrichtung 220 vorzugsweise Führungen vorgesehen, welche sich entlang der Längsachse des aufgenommenen Fasses F erstrecken und eine Bewegung der Absaugeinrichtung 224 in Richtung der Längsachse des Fasses F ermöglichen. Bevorzugt ist an der Absaugeinrichtung 224 zudem ein Dämpfungselement 225 vorgesehen, welches später näher beleuchtet wird.

Weiterhin umfasst die Halterungseinrichtung 220 vorzugsweise eine Fixiereinrichtung 226. Die Fixiereinrichtung 226 ist vorzugsweise vorgesehen, um den Deckel D des Fasses F während des Versetzens/Verkippens an dem Fass F zu fixieren. Im konkret dargestellten Fall umfasst die Fixiereinrichtung 226 eine Antriebseinheit 2261 sowie eine Fixiereinheit 2262. Vorzugsweise ist die Antriebseinheit 2261 über die Steuereinrichtung derart ansteuerbar, dass die Fixiereinheit 2262 in Richtung der Längsachse/in Z-Richtung verfahrbar ist.

In der gezeigten Ausführungsform ist die Fixiereinheit 2262 vorzugsweise an der Absaugeinrichtung 224 angeordnet und gemeinsam mit der Absaugeinrichtung 224 über die Antriebseinheit 2261 in der Längsrichtung verfahrbar. Die Kopplung der Absaugeinrichtung 224 und der Antriebseinheit 2261 ist vorzugsweise durch das Dämpfungselement 225 gebildet. Weiterhin umfasst die Fixiereinheit 2262 vorzugsweise zwei Führungszylinder, welche radial in Bezug auf den Rand des Fasses F angeordnet und in radialer Richtung zu der Längsachse des Fasses F hin ausfahrbar sind. Die Führungszylinder sind vorzugsweise ebenfalls über die vorgenannte Steuereinrichtung ansteuerbar. Zudem ist an den ausfahrbaren Enden der Führungszylinder vorzugsweise jeweils ein Fixierelement 2263 vorgesehen.

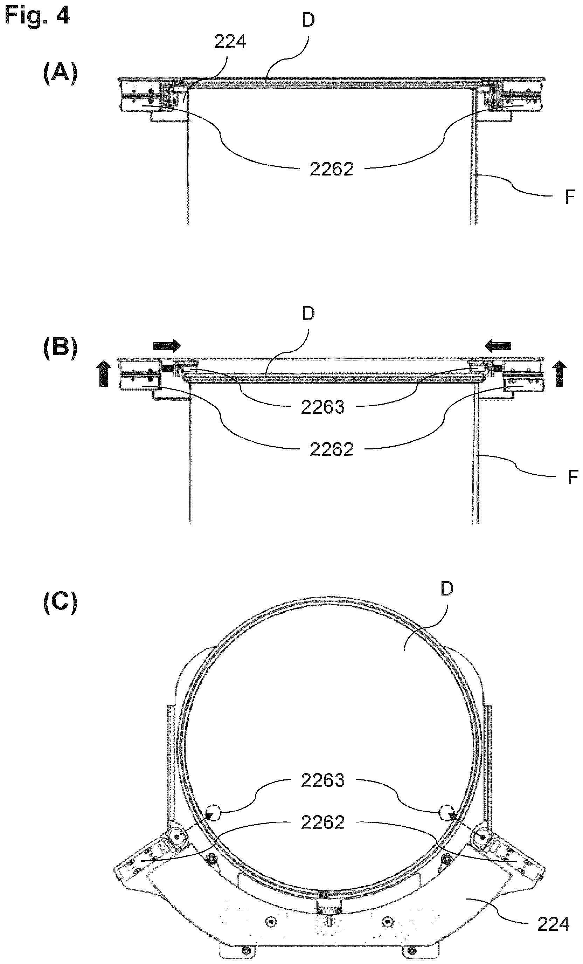

Die Figuren 4 A bis C veranschaulichen den Aufbau sowie die Funktionsweise der Fixiereinrichtung 226 in der vorliegenden Ausführungsform.

Figur 4 A zeigt einen Ausgangszustand, in dem das Fass F in die Halterungseinrichtung 220 aufgenommen und durch die Fassklemmung 223 fixiert ist.

Zum Fixieren des Deckels D steuert die Steuereinrichtung zunächst die Antriebseinheit 2261 an. In der Folge wird die Absaugeinheit 224 gemeinsam mit der Fixiereinheit 2262 entlang der Längsachse der Fasses F in Richtung des Deckels D nach oben verfahren bzw. angehoben. Dieser Vorgang ist in Figur 4 B anhand der vertikalen nach oben gerichteten Pfeile veranschaulicht. In einem so erreichten angehobenen Zustand sind die Fixierelemente 2263 oberhalb des Deckels D angeordnet. Anschließend steuert die Steuereinrichtung die Führungszylinder der Fixiereinheit 2262 an, so dass diese in der radialen Richtung zu der Längsachse des Fasses F ausgefahren werden. Dieser Vorgang wird durch die horizontalen zur Mitte gerichteten Pfeile in Figur 4B veranschaulicht. Beim Verfahren überschreiten die Fixierelemente 2263 den Rand des Fasses F und überdecken somit, wie in Figur 4 C anhand der gestrichelten Kreise veranschaulicht, die Oberfläche des Deckels D. Abschließend steuert die Steuereinrichtung erneut die Antriebseinheit 2261 an, um die Fixiereinheit 2262 entlang der Längsachse des Fasses F in Richtung des Fassbodens nach unten zu verfahren bzw. abzusenken. Dabei werden die Fixierelemente 2263 auf den Deckel D gedrückt, so dass dieser an dem Fass F fixiert ist.

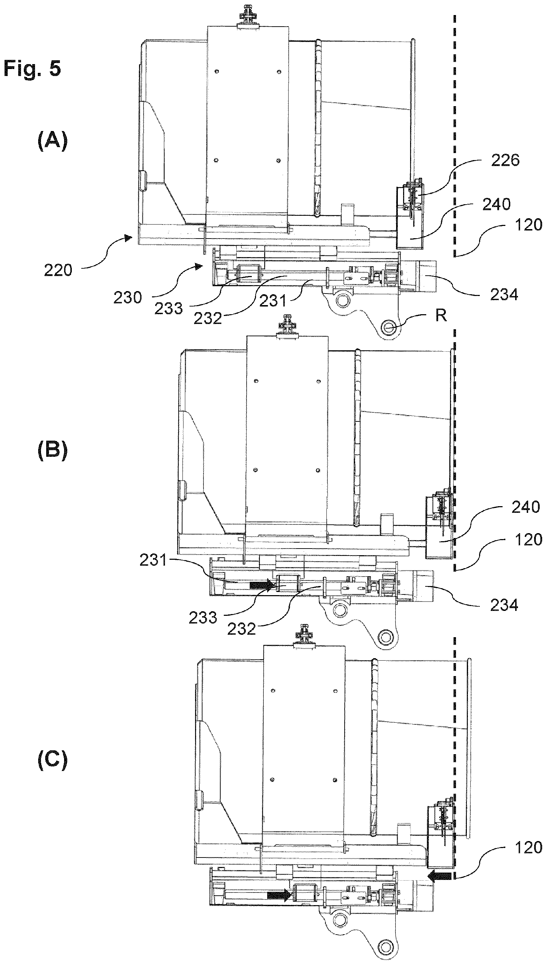

Wie vorstehend erläutert ist die Halterungseinrichtung 220 mit der Behälterversetzeinrichtung 230 verbunden. In den Figuren 5 A bis C sind Zustände gezeigt, welche durch Zusammenwirken der Behälterversetzeinrichtung 230 und der Halterungseinrichtung 220 erreicht werden können.

Die Behälterversetzeinrichtung 230 umfasst vorzugsweise einen Linearantrieb 231. Der Linearantrieb 231 ist vorzugsweise eingerichtet, die Halterungseinrichtung 220 entlang der Längsachse des Fasses F zu verfahren/versetzen. Vorzugsweise wird der Linearantrieb 231 ebenfalls über die Steuereinrichtung angesteuert. Im konkret dargestellten Fall umfasst der Linearantrieb 231 eine entlang der Längsachse des Fasses F angeordnete Spindel 232, einen auf der Spindel 232 verfahrbaren Schlitten 233 sowie einen mit der Spindel 232 verbundenen Motor 234. Der Motor 234 ist vorzugsweise durch einen Druckluftmotor gebildet, der über eine bereitgestellte Druckluftversorgung antreibbar ist. Der Schlitten 233 ist vorzugsweise an der Basis 221 der Halterungseinrichtung 220 befestigt und stellt somit die Verbindung zwischen der Behälterversetzeinrichtung 230 und der Halterungseinrichtung 220 bereit.

Bei Ansteuerung des Linearantriebs 231 durch die Steuereinrichtung wird vorzugsweise über den Motor 234 ein Drehmoment auf die Spindel 232 aufgebracht, so dass sich diese dreht. Die Spindel 232 weist vorzugsweise ein Gewinde auf, welche das Drehmoment auf den Schlitten 233 überträgt und in eine Bewegung entlang der Längsachse des Fasses F umsetzt.

Figur 5 A zeigt die Halterungseinrichtung 220 in der verkippten Position. Ausgehend von dieser Position kann das in der Halterungseinrichtung 220 aufgenommene Fass F unter Ansteuerung des Linearantriebs 231 der Behälterversetzeinrichtung 230 in Richtung der Anschlussöffnung 120 des Isolators 1 versetzt werden.

Figur 5 B zeigt einen Zustand, welcher nach Versetzen der Halterungseinrichtung 220 durch die Behälterversetzeinrichtung 230 in Richtung der Anschlussöffnung 120 des Isolators 1 vorliegen kann. Im Konkret dargestellten Fall, wurde die Halterungseinrichtung 220 so weit versetzt, dass der Rand des Fasses F an die Anschlussöffnung 120 angrenzt. In dem gezeigten Fall schlägt das Gehäuse der Absaugeinrichtung 224 an eine die Anschlussöffnung 120 umgebende Außenwand des Grundkörpers 100 des Isolators 1 an.

Bei weiterem Versetzen der Halterungseinrichtung 220 durch die Behälterversetzeinrichtung 230 in Richtung der Anschlussöffnung 120, wird der in Figur 5 C gezeigte Zustand erreicht. Das Fass F wurde soweit versetzt, dass zumindest die Öffnung des Fasses F durch die Anschlussöffnung 120 in den Innenraum des Grundkörpers 100 des Isolators 1 eingeführt ist. Diese Position stellt die Entleerungsposition dar, in welcher das pulver-/granulatförmige Produkt zur Entleerung des Fasses F bestimmungsgemäß in den Innenraum des Grundkörpers 100 entnommen/entleert wird.

Beim Versetzen der Halterungseinrichtung 220 von dem in Figur 5 B gezeigten Zustand in den in Figur 5 C gezeigten Zustand kann die an der Außenwand angestoßene Absaugeinrichtung 224 aufgrund der in Bezug auf die Halterungseinrichtung 220 beweglichen Lagerung eine Relativbewegung zu der Halterungseinrichtung 220 ausführen. Die Relativbewegung der Absaugeinrichtung 224 erfolgt vorzugsweise in einer der Versetzbewegung der Halterungseinrichtung 220 entgegengesetzten Richtung. Vorzugsweise wird das vorgenannte Dämpfungselement 225 im Zuge der Relativbewegung gestaucht. Aufgrund des vorstehend beschriebenen Mechanismus kann die Absaugeinrichtung 224 beim Einführen der Öffnung des Fasses F von dem Bereich um die Öffnung des Fasses F entfernt werden. Die Fixierelemente 2263 der Fixiereinrichtung 226 werden vor Beginn der Relativbewegung vorzugsweise eingefahren.

Indem die Halterungseinrichtung 220 entlang der Längsachse des Fasses F verfahren/versetzt werden kann, kann die Halterungseinrichtung 220 eine Vielzahl von Zwischenpositionen entlang des anhand der Behälterversetzeinrichtung 230 bereitgestellten Verfahrweges einnehmen.

Die erfindungsgemäße Versetzeinrichtung zum Versetzen der Halterungseinrichtung 220 ist vorzugsweise durch eine Kombination der Hubeinrichtung 210 und der Behälterversetzeinrichtung 230 gebildet.

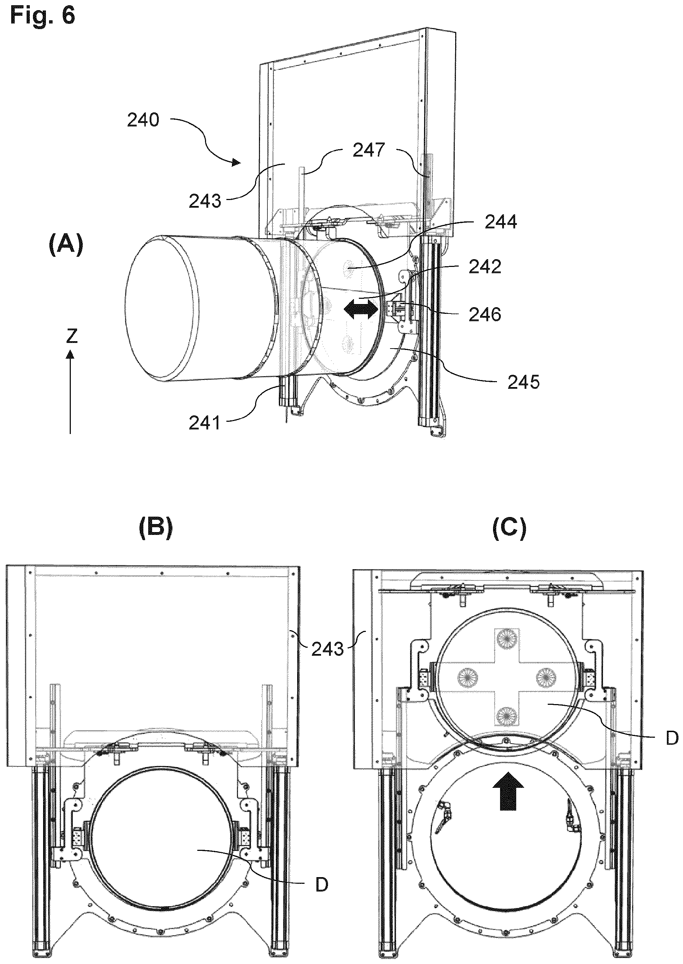

Weiterhin umfasst die Anschlussvorrichtung 2 vorzugsweise die Deckelversetzeinrichtung 240. Die Figuren 6 A bis C veranschaulichen den Aufbau sowie die Funktionsweise der Deckelversetzeinrichtung 240 in der vorliegenden Ausführungsform.

Die Deckelversetzeinrichtung 240 ist vorzugsweise an der die Anschlussöffnung 120 umgebenden Außenwand des Grundkörpers 100 des Isolators 1 angeordnet. Die Deckelversetzeinrichtung 240 umfasst vorzugsweise einen Deckelversetzantrieb 241, eine Greifeinrichtung 242 und ein Deckelgehäuse 243.

Der Deckelversetzantrieb 241 ist vorzugsweise über einen Pneumatikzylinder gebildet und über die Steuereinheit ansteuerbar. In der vorliegenden Ausführungsform ist der Deckelversetzantrieb 241 durch zwei Pneumatikzylinder gebildet.

Die Greifeinrichtung 242 umfasst vorzugsweise eine Greifeinheit 244 und eine Aufnahmeplatte 245, mit welcher die Greifeinheit 244 über eine Greifeinheitversetzeinrichtung 246 verbunden ist.

Die Greifeinheit 244 ist vorzugsweise durch zumindest einen Vakuumsauger gebildet. In der dargestellten Ausführungsform umfasst die Greifeinheit 244 vier Vakuumsauger, welche im Wesentlichen kreuzförmig und in Überdeckung mit der Oberfläche des Deckels D angeordnet sind. Die Vakuumsauger sind bevorzugt über einen nicht gezeigten Pumpenanschluss mit der bereits zuvor genannten Vakuumpumpe verbunden.

Die Greifeinheitversetzeinrichtung 246 ist durch die Steuereinrichtung ansteuerbar, so dass die Greifeinheit 244 in Richtung der Längsachse des Fasses F verfahrbar/versetzbar ist. In der vorliegenden Ausführungsform ist die Greifeinheitversetzeinrichtung 246 durch zwei Führungszylinder gebildet, welche einerseits mit der Aufnahmeplatte 245 und andererseits mit der Greifeinheit 244 verbunden sind. Die Führungszylinder sind, wie in Figur 6 A anhand des Pfeils angedeutet, jeweils in einer dem Deckel D des Fasses F zugewandten Richtung ein- bzw. ausfahrbar, sodass die Greifeinheit 244 zwischen einer Ausgangsposition, in welcher die Vakuumsauger der Greifeinheit 244 von der Oberfläche des Deckels D beabstandet sind, und einer Ansaugposition, in welcher die Vakuumsauger durch Ausfahren der Führungszylinder an die Oberfläche des Deckels D angrenzen, bewegbar ist. In dieser Ansaugposition kann der Deckel D durch die Vakuumsauger angesaugt werden bzw. gegriffen werden. Anschließend werden die Führungszylinder eingefahren, so dass die Greifeinheit 244 - den Deckel D greifend - wieder in die Ausgangsposition zurückkehrt. Dabei wird der Deckel D von der Öffnung des Fasses F entfernt.

Weiterhin ist die Greifeinrichtung 242 vorzugsweise beweglich gegenüber der Anschlussöffnung 120 gelagert. In der vorliegenden Ausführungsform sind diesbezüglich zwei Führungsschienen 247, welche im Wesentlichen in Z-Richtung angeordnet und an der Außenwand des Grundkörpers 100 befestigt sind, vorgesehen.

Der Deckelversetzantrieb 241 ist vorzugsweise mit der Aufnahmeplatte 245 verbunden und so durch die Steuereinrichtung ansteuerbar, dass die Greifeinrichtung 242 entlang der Führungsschienen 247 verfahren bzw. versetzt werden kann. Auf diese Weise kann die Greifeinrichtung 242 entlang der Z-Richtung zwischen der in Figur 6 A und B gezeigten Ausgangsposition und einer in Figur 6 C angedeuteten Öffnungsposition, in welcher die Greifeinrichtung 242 vorzugsweise den Deckel D greifend in positiver Z-Richtung nach oben in das Deckelgehäuse 243 versetzt/verfahren ist, bewegt werden. Der Deckel liegt damit in einem versetzten Zustand vor.

Darüber hinaus ist die Aufnahmeplatte 245 der Greifeinrichtung 242 weiter ausgebildet, die Anschlussöffnung 120 des Grundkörpers 100 in der Ausgangsposition abzudecken. Vorzugsweise kann die Aufnahmeplatte 245 die Anschlussöffnung 120 und somit den Innenraum des Grundkörpers 100 luftdicht gegenüber der Außenumgebung verschließen. Alternativ kann in der Ausgangsposition jedoch auch ein Spalt zwischen der Aufnahmeplatte 245 und der Anschlussöffnung 120 gebildet bzw. vorgesehen sein. Über jenen Spalt kann aufgrund des geringeren Umgebungsdrucks im Innenraum des Grundkörper 100 ein in den Innenraum des Grundkörpers 100 gerichteter Luftstrom erzeugt werden, der einem Austreten von Produkt P aus dem Innenraum in die Außenumgebung entgegenwirkt oder jenes zumindest reduziert.

Zum Freigeben der Anschlussöffnung 120 wird die Greifeinrichtung 242 vorzugsweise in die in Figur 6 C gezeigte Öffnungsposition bewegt. In der Öffnungsposition liegt die Anschlussöffnung 120 somit aufgrund der nach oben versetzten Aufnahmeplatte 245 vorzugsweise vollständig frei, sodass das Fass F zumindest abschnittsweise durch die Anschlussöffnung 120 in den Innenraum des Grundkörpers 100 einführbar ist.

Die Deckelversetzeinrichtung 240 bildet somit zusätzlich eine Schleuse für die Anschlussöffnung 120 des Isolators 1 aus.

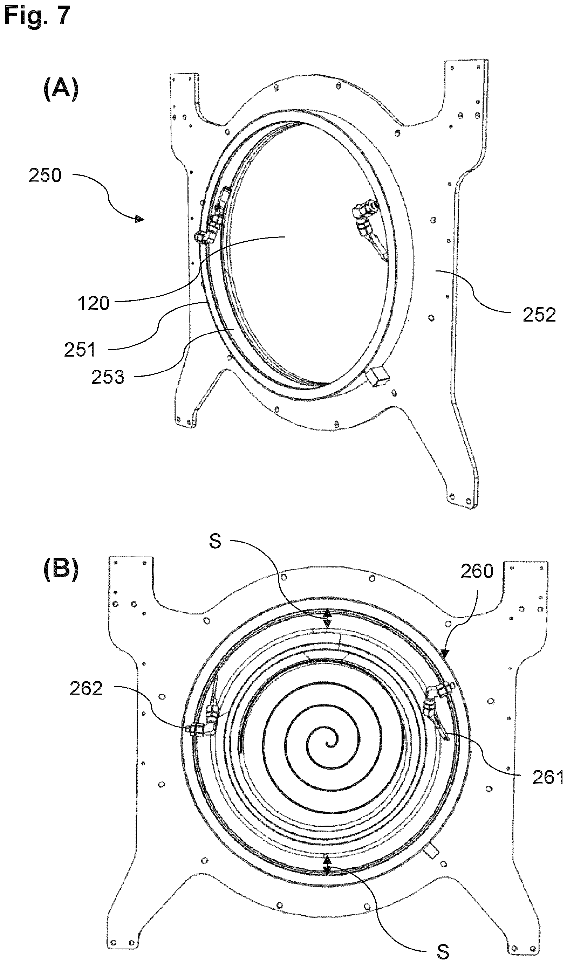

Nachfolgend wird der Aufbau und die Funktionsweise der bevorzugten Dichteinrichtung 250 der erfindungsgemäßen Anschlussvorrichtung 2 unter Bezugnahme auf die Figuren 7 A und B beschrieben.

Figur 7 A veranschaulicht den Aufbau der bevorzugten Dichteinrichtung 250 in der vorliegenden Ausführungsform.

Die Dichteinrichtung 250 ist in der vorliegenden Ausführungsform bevorzugt in Form eines Dichtrings 251 gebildet, welcher der inneren Kontur der Anschlussöffnung 120 des Grundkörpers 100 umlaufend folgt und vorzugsweise zumindest abschnittsweise in den Innenraum des Grundkörpers 100 ragt. Der Dichtring 251 ist vorzugsweise über eine Anschlussplatte 252 an der Außenwand des Grundkörpers 100 befestigt. In Figur 7 A ist die an der Außenwand anliegende Fläche der Anschlussplatte 252 dem Betrachter zugewandt. Die Anschlussplatte 252 kann bevorzugt auch der Befestigung der Deckelversetzeinrichtung 240 dienen.

Alternativ kann die bevorzugte Dichteinrichtung 250 auch unabhängig von der Anschlussvorrichtung 2 an dem Isolator 1 befestigt sein. Beispielsweise kann die bevorzugte Dichteinrichtung 250 auch direkt an der Anschlussöffnung 120 oder an dem Isolator 1 befestigt sein.

Innerhalb des Dichtrings 251 ist vorzugsweise ein verstellbares Dichtelement 253 angeordnet. Das Dichtelement 253 ist in der gezeigten Ausführungsform vorzugsweise durch eine torusförmige Blähdichtung gebildet. Weiterhin umfasst die Dichteinrichtung 250 einen nicht gezeigten Pumpenanschluss, über welchen Luft in die Blähdichtung eintreten oder austreten kann. Diesbezüglich ist der Pumpenanschluss vorzugsweise an eine Druckluftversorgung angeschlossen, sodass der Luftdruck innerhalb der Blähdichtung erhöht werden kann. Darüber hinaus umfasst die Dichteinrichtung 250 eine nicht gezeigte Einstelleinrichtung, über welche der Luftdruck innerhalb der Blähdichtung einstellbar ist. Die Einstelleinrichtung ist vorzugsweise über die Steuereinrichtung ansteuerbar. Bei Erhöhen des Luftdrucks dehnt sich die Blähdichtung vorzugsweise aus, so dass eine Ausdehnung der Blähdichtung zunimmt, wohingegen sie sich bei Erniedrigung des Luftdrucks vorzugsweise entspannt, so dass die Ausdehnung der Blähdichtung abnimmt.

In Figur 7 B ist das Fass F in der Entleerungsposition angeordnet, so dass zumindest die Öffnung des Fasses F durch die Anschlussöffnung 120 in den Innenraum des Grundkörpers 100 eingeführt ist. In dieser Entleerungsposition ist die Blähdichtung der äußeren Wandung des Fass F zugewandt. In einem Ausgangszustand, in dem das Fass F durch die Anschlussöffnung 120 eingeführt wird, wirkt vorzugsweise lediglich ein geringer Luftdruck oder kein Luftdruck auf die Blähdichtung, sodass diese entspannt vorliegt und eine geringe Ausdehnung aufweist. Auf diese Weise ist ein Spalt S zwischen der Blähdichtung und der äußeren Wandung des Fasses F gebildet. Der Spalt S ermöglicht somit ein einfaches Einführen/Abdocken des Fasses F in den Innenraum des Grundkörpers 120.

Zur Herstellung eines abgedichteten Zustandes, kann die Blähdichtung unter Luftzufuhr ausgedehnt werden, um den Spalt S zu schließen. In dem abgedichteten Zustand wird die Blähdichtung somit umlaufend und unmittelbar bzw. direkt gegen die äußere Wandung des Fasses F gedrückt. Auf diese Weise ist der Innenraum des Grundkörpers 100 gegenüber der Außenumgebung derart verschlossen, so dass vorzugsweise kein Luftaustausch zwischen dem Innenraum des Grundkörpers 120 und der Außenumgebung stattfindet. Folglich besteht in dem abgedichteten Zustand bei Handhabung des pulver-/granulatförmigen Produkts im Innenraum des Grundkörpers 100 eine geringe Kontaminationsgefahr für das Produkt oder den Anwender.

Ist die Entleerung des pulver-/granulatförmigen Produkts in den Grundkörper 100 abgeschlossen, ist es erforderlich das Fass F aus dem Innenraum auszuführen. Diesbezüglich kann die Dichteinrichtung 250 bevorzugt ausgehend von dem abgedichteten Zustand in einen zumindest teilweise geöffneten Zustand versetzt werden. Dazu stellt die Einstelleinrichtung den Luftdruck in der Blähdichtung so ein, dass diese entspannt wird und sich wiederum der Spalt S bildet. Im Vergleich zu dem zum Einführen des Fasses F gebildeten Ausgangszustand ist der Spalt S im zumindest teilweise geöffneten Zustand bevorzugt erheblich kleiner, so dass aufgrund des geringeren Umgebungsdrucks im Innenraum des Grundkörper 100 ein in den Innenraum des Grundkörpers 100 gerichteter Luftstrom erzeugt wird.

Dieser gerichtete Luftstrom verläuft vorzugsweise entlang der äußeren Wandung des Fasses F und wird vorzugsweise umlaufend um die äußere Wandung des Fasses gebildet. Der gerichtete Luftstrom bewirkt, das pulver-/granulatförmiges Produkt nicht von dem Innenraum des Grundkörpers 100 an die Außenumgebung gelangt. Darüber hinaus kann pulver-/granulatförmiges Produkt, welches an der Blähdichtung selbst anhaftet, auf diese Weise vorzugsweise gelöst und folglich abgesaugt werden. Somit besteht auch bei Entnahme des Fasses F aus dem Grundkörper 100 eine verringerte Kontaminationsgefahr für den Anwender.

Vorzugsweise kann die Anschlussvorrichtung 2 weiterhin die bevorzugte Abblaseinrichtung 260 aufweisen. Der Aufbau und die Funktionsweise der bevorzugten Abblaseinrichtung 260 wird nachfolgend unter Bezugnahme auf die Figur 7 B erläutert. Die Abblaseinrichtung 260 umfasst in der gezeigten Ausführungsform zwei im Innenraum des Grundkörpers 100 angeordnete Druckluftdüsen 261 und 262. Die Druckluftdüsen 261 und 262 sind der gezeigten Ausführungsform an dem Dichtring 251 der bevorzugten Dichteinrichtung 251 befestigt. Die Druckluftdüsen 261 und 262 können jedoch auch anderweitig im Innenraum des Grundkörpers 100 angebracht werden. Die Druckluftdüsen 261 und 262 sind vorzugsweise im Wesentlichen tangential in Bezug auf die innere Wandung des Fasses F ausgerichtet, wobei Spitzen der Druckluftdüsen 261 und 262 in Richtung des Bodens des Fasses F zeigen. Die Druckluftdüsen 261 und 262 sind mit der Druckluftversorgung verbunden und umfassen ein nicht gezeigtes Einstellmittel, über welches die Druckluftzufuhr ein- bzw. abgestellt werden kann. Das Einstellmittel ist vorzugsweise durch die Steuereinrichtung ansteuerbar.

Die bevorzugte Abblaseinrichtung 260 ist vorzugsweise eingerichtet, die innere Wandung des Fasses F nach Beendigung des Entleerens abzublasen, sodass sich an der inneren Wandung anhaftendes pulver-/granulatförmiges Produkt von der Wandung löst und durch den im Innenraum des Grundkörpers 100 erzeugten Unterdruck über den Pumpenanschluss 140 abgesaugt werden kann. Diesbezüglich werden über die Druckluftdüsen 261 und 262 vorzugsweise einer oder mehrere kurze Luftstöße ausgelöst, welche das anhaftende Produkt aufwirbeln.

Vorzugsweise wird somit eine spiralförmige Luftströmung innerhalb des Fasses F erzeugt, wie sie beispielhaft in Figur 7 B angedeutet ist.

Die nicht gezeigte Steuereinrichtung umfasst vorzugsweise eine Bedieneinrichtung, über welcher der Anwender die von der Steuereinrichtung ansteuerbaren Elemente des Isolators 1 sowie die erfindungsgemäße Anschlussvorrichtung 2 bedienen kann. Bevorzugt ist ein Ansteuern der Elemente nur möglich, sofern der Anwender eine auf der Bedieneinrichtung vorgesehene Bedientaste dauerhaft betätigt. Ein Beispiel für eine entsprechende Bedieneinrichtung ist eine Zweihandsteuerung.

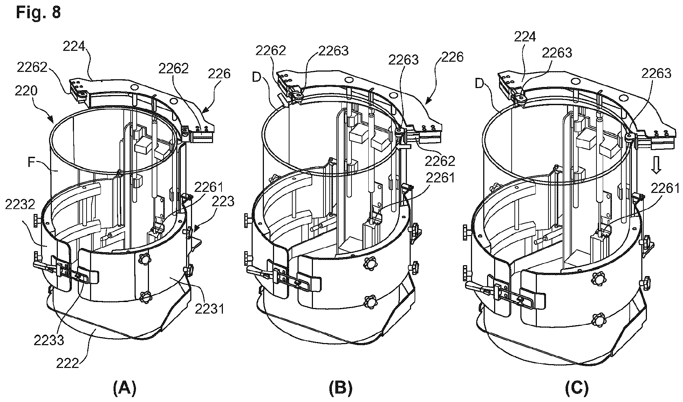

Die Figuren 8 A bis I zeigen das bestimmungsgemäße Verfahren zum Anschließen des Fasses F an den Isolator 1 unter Verwendung der erfindungsgemäßen Anschlussvorrichtung 2.

Figur 8 A veranschaulicht einen ersten Schritt, in dem das zu entleerende Fass F bestimmungsgemäß in die Halterungseinrichtung 220 aufgenommen wird. Entsprechend ist lediglich die Halterungseinrichtung 220 dargestellt. Zur Aufnahme des Fasses F ist die Halterungseinrichtung 220 von der nicht gezeigten Hubeinrichtung 210 bevorzugt in die anfängliche Halterungsposition versetzt. Bevorzugt ist vor Einsetzen des Fasses F der Spannhebel 2233 gelöst und die Flügel 2231 und 2232 der Fassklemmung 223 sind derart aufgespreizt, dass das Fass F vom Anwender auf die Aufnahmeplatte 222 gestellt/geschoben werden kann. Anschließend werden die Flügel 2231 und 2232 durch den Anwender in Anlage mit der äußeren Wandung des Fasses F gebracht und über den Spannhebel 2233 derart verspannt, dass das Fass F innerhalb der Halterungseinrichtung 220 fixiert wird. Die Absaugeinrichtung 224 und die mit der Ansaugeinrichtung 224 verbundene Fixiereinheit 2262 sind in dem in Figur 8 A gezeigten Zustand bevorzugt durch die Antriebseinheit 2261 angehoben. Die Führungszylinder der Fixiereinheit 2262 sind vorzugsweise hingegen eingefahren. Die Absaugeinrichtung 224 ist eingeschalten und saugt bereits zu diesem Zeitpunkt ab. Bevorzugt entfernt der Anwender im vorliegenden Zustand zunächst eine den Deckel D an dem Fass F fixierende Schelle und hebt anschließend den Deckel D leicht an, um die klebende Dichtung zwischen Deckel D und Fass F zu lösen. Im Zuge dessen austretendes pulver-/granulatförmiges Produkt kann über die Absaugeinrichtung 224 abgesaugt werden. Das Fass F liegt damit in einem vorbereiteten Zustand vor und kann ausgehend von diesem vorbereiteten Zustand ohne weitere Handhabung durch den Anwender an den Isolator 1 angeschlossen werden. Der Anwender wendet sich nun vorzugsweise der Bedieneinrichtung der Steuereinrichtung zu.

In einem bevorzugten zweiten Schritt wird der vorgelöste Deckel D über die Fixiereinrichtung 226 an dem Fass F fixiert. Zunächst werden diesbezüglich vorzugsweise die Führungszylinder der Fixiereinheit 2262 über die Steuereinheit angesteuert und ausgefahren (nach innen gerichtete Pfeile in Figur 8 B), so dass die Fixierelemente 2263 in Überdeckung mit dem Deckel D gelangen. Dieser Zustand ist in Figur 8 B veranschaulicht. Anschließend wird vorzugsweise die Antriebseinheit 2261 so über die Steuereinheit angesteuert, dass die Absaugeinrichtung 224 gemeinsam mit der Fixiereinheit 2262 derart abgesenkt (nach unten gerichtete Pfeile in Figur 8 C) werden, dass die Fixierelemente 2263 auf die Oberfläche des Deckels D gedrückt werden und diesen am Fass F fixieren. Der somit erreichte Zustand ist in Figur 8 C dargestellt.

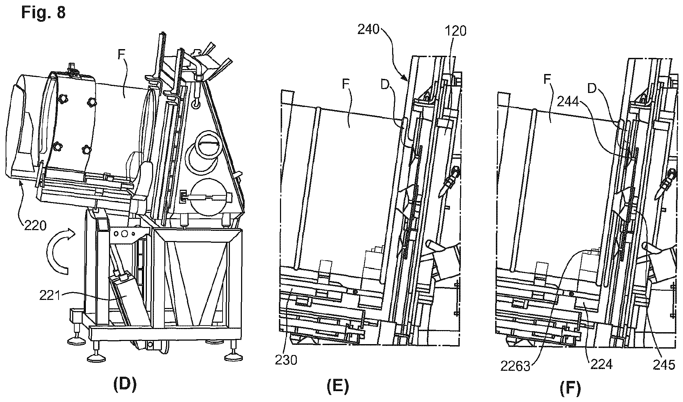

In einem dritten Schritt wird die Halterungseinrichtung 220 mit dem darin fixierten Fass F unter Ansteuerung der Hubeinrichtung 210 über die Steuereinrichtung in die verkippte Position überführt. Der resultierende Zustand ist in Figur 8 D veranschaulicht.

In einem vierten Schritt wird die Halterungseinrichtung 220 mit dem darin fixierten Fass F unter Ansteuerung der Behälterversetzeinrichtung 230 über die Steuereinrichtung von der verkippten Position in Richtung der Anschlussöffnung 120 des Grundkörpers 100 in eine Zwischenposition versetzt. Wie in Figur 8 E dargestellt, ist der Deckel D des Fasses F in diesem Zustand nur noch geringfügig von den Vakuumsaugern der Greifeinheit 244 beabstandet.

In einem bevorzugten fünften Schritt wird der Deckel D vom Fass F entfernt. Diesbezüglich werden vorzugsweise zunächst die Führungszylinder der Greifeinheitversetzeinrichtung 245 über die Steuereinrichtung angesteuert und ausgefahren. Somit wird die Greifeinheit 244 vorzugsweise von der Ausgangsposition in die Ansaugposition bewegt. Anschließend wird der Deckel D über die Vakuumsauger angesaugt. Darauffolgend wird vorzugsweise die Antriebseinheit 2261 über die Steuereinheit angesteuert, um die Absaugeinheit 224 und die Fixiereinheit 2262 soweit anzuheben, dass die Fixierelemente 2263 nicht mehr in Kontakt mit dem Deckel D sind. Nun werden vorzugsweise die Führungszylinder der Fixiereinheit 2262 unter Ansteuern durch die Steuereinrichtung eingefahren, so dass die Fixierelemente 2263 den Deckel D nicht länger überdecken. Auf diese Weise kann die Greifeinheit 244 - den Deckel D greifend - anschließend unter Ansteuerung der Greifeinheitversetzeinrichtung 245 vorzugsweise von der Ansaugposition zurück in die Ausgangsposition versetzt werden. Wie in Figur 8 F veranschaulicht, liegt das Fass F somit vorzugsweise in dem geöffneten Zustand in der Zwischenposition vor.

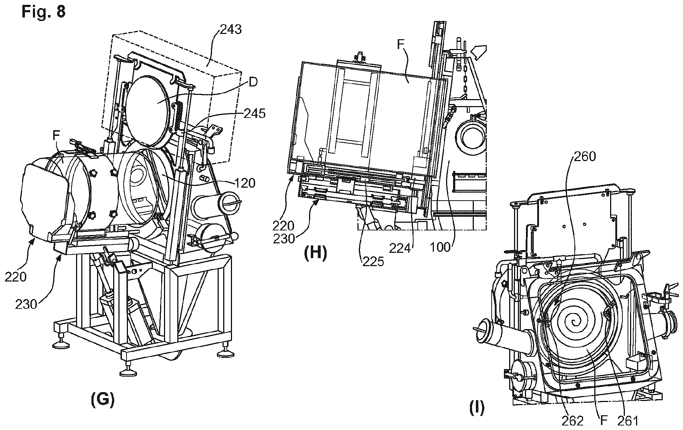

In einem bevorzugten sechsten Schritt wird der Deckelversetzantrieb 241 derart über die Steuereinrichtung angesteuert, dass die den Deckel D greifende Greifeinrichtung 242 von der Ausgangsposition nach oben in die Öffnungsposition verfahren. Somit ist der Deckel D nunmehr vorzugsweise in das Deckelgehäuse 243 der Deckelversetzeinrichtung 240 aufgenommen. Weiterhin verschließt die Aufnahmeplatte 245 der Greifeinrichtung 242 in der Öffnungsposition vorzugsweise nicht länger die Anschlussöffnung 120. Die Blähdichtung der bevorzugten Dichteinrichtung 250 liegt zu diesem Zeitpunkt in dem entspannten Zustand vor. Auf diese Weise liegt vorzugsweise der weitere Verfahrweg der Halterungseinrichtung 220 in die Entleerungsposition mithilfe der Behälterversetzeinrichtung 230 frei. Der erreichte Zustand ist in Figur 8 G veranschaulicht.

In einem siebten Schritt wird die Behälterversetzeinrichtung 230 derart über die Steuereinrichtung angesteuert, dass die Halterungseinrichtung 220 in die
Entleerungsposition verfahren wird. Somit wird zumindest die Öffnung des Fasses F durch die Anschlussöffnung 120 in den Innenraum des Grundkörpers 100 eingeführt. Die Absaugeinrichtung 224 stößt bevorzugt im Zuge dieser Versetzbewegung an der Außenwand des Grundkörpers 100 an und führt unter Stauchung des Dämpfungselements 225 die Relativbewegung aus. Weiterhin wird vorzugsweise die Einstelleinrichtung der bevorzugten Dichteinrichtung 250 vorzugsweise derart angesteuert, dass der Luftdruck innerhalb der Blähdichtung erhöht wird. Die Blähdichtung dehnt sich folglich vorzugsweise aus und wird an die äußere Wandung des Fasses F gedrückt. Das Fass F liegt somit vorzugsweise im abgedichteten Zustand in der Entleerungsposition vor. Das Fass F ist somit an den Isolator 1 angeschlossen. Der erreichte Zustand ist in Figur 8 H dargestellt.

Der sechste und der siebte Schritt können vorzugsweise simultan ausgeführt werden.

Der Anwender kann sich nun von der Bedieneinrichtung abwenden und der vorderen Seite des Isolators 1 zuwenden. Der Anwender führt seine Arme über die Eingriffe 110 in die Handschuhe ein und öffnet, sofern erforderlich, den versiegelten Foliensack, in welchen das pulver-/granulatförmige Produkt eingeschlossen ist. Anschließend kann der Anwender das pulver-/granulatförmige Produkt der Produktführung 130 zuführen. Nach Entleerung entnimmt der Anwender vorzugsweise den verbleibenden Foliensack aus dem Fass F und entsorgt diesen über den Abfallabschnitt 150. Das Entleeren des Fasses F ist damit beendet.

Nun wendet sich der Anwender vorzugsweise wieder der Bedieneinrichtung zu und steuert das Einstellmittel der bevorzugten Abblaseinrichtung 260 so an, dass die Druckluftdüsen 261 und 262 einen oder mehrere kurze Luftstöße ausstoßen. In der Folge wird vorzugsweise die in Figur 8 I angedeutete spiralförmige Luftströmung hervorgerufen, welche an der inneren Wandung des Fasses F anhaftendes pulver-/granulatförmiges Produkt aufwirbelt. Dieses pulver-/granulatförmige Produkt wird vorzugsweise in der Folge über den Pumpenanschluss 140 im Inneren des Grundkörpers 100 abgesaugt. Das Fass F ist nunmehr zum Ausschleusen/Abdocken aus/von dem Grundkörper vorbereitet.

In einem bevorzugten achten Schritt wird die Einstelleinrichtung der bevorzugten Dichteinrichtung 250 derart über die Steuereinrichtung angesteuert, dass der Luftdruck innerhalb der Blähdichtung verringert wird. Vorzugsweise entspannt sich in der Folge die Blähdichtung und es bildet sich der Spalt S derart, dass der in den Innenraum des Grundkörpers 100 gerichtete Luftstrom erzeugt wird. Somit kann vorzugsweise beim Ausschleusen freigesetztes Produkt in den Innenraum des Grundkörpers 100 abgesaugt werden.

Abschließend werden die Schritte 1 bis 7 in umgekehrter Reihenfolge ausgeführt.

Die Absaugeinrichtung 224 saugt vorzugsweise während des gesamten vorgenannten Verfahrens kontinuierlich ab.

Alle allgemeinen Ausführungen der Erfindung vor der Figurenbeschreibung gelten für die Ausführungsform gleichermaßen.

## Patentansprüche

1. Anschlussvorrichtung (2) zum Anschließen eines ein pulver-/granulatförmiges Produkt enthaltenden Behälters (F) an einen Isolator (1) mit einer Anschlussöffnung (120), durch welche der Behälter (F) zum Entleeren bestimmungsgemäß in den Isolator (1) eingeführt wird, wobei die Anschlussvorrichtung (2) aufweist:
eine Halterungseinrichtung (220), welche eingerichtet ist, den Behälter (F) aufzunehmen und während des Anschließens und des Entleerens zu halten;
eine Versetzeinrichtung (210, 230) zum Versetzen der Halterungseinrichtung (220); und
eine Steuereinrichtung zur Steuerung der Versetzeinrichtung (210, 230); wobei
die Steuereinrichtung eingerichtet ist, die Versetzeinrichtung (210, 230) derart anzusteuern, dass sie die Halterungseinrichtung (220) zusammen mit dem Behälter (F) ausgehend von einer anfänglichen Halterungsposition, in welcher der Behälter (F) bestimmungsgemäß in der Halterungseinrichtung (220) aufgenommen ist, so in eine Entleerungsposition versetzt, dass zumindest eine Öffnung des Behälters (F), über welche das pulver-/granulatförmige Produkt zur Entleerung des Behälters (F) bestimmungsgemäß entnommen wird, durch die Anschlussöffnung (120) in den Isolator (1) eingeführt ist.

2. Anschlussvorrichtung (2) nach Anspruch 1, wobei
die Halterungseinrichtung (220) beim Versetzen eine Zwischenposition durchläuft, und
an der Halterungseinrichtung (220) eine Absaugeinrichtung (224) vorgesehen ist, welche eingerichtet ist, einen Bereich um die Öffnung des Behälters (F) während des Versetzens von der anfänglichen Halterungsposition in die Zwischenposition abzusaugen, sodass aus dem Behälter (F) austretendes pulver-/granulatförmiges Produkt abgesaugt wird.

3. Anschlussvorrichtung (2) nach Anspruch 2, wobei
die Absaugeinrichtung (224) in Bezug auf die Halterungseinrichtung (220) derart gelagert ist, dass die Absaugeinrichtung (224) und die Halterungseinrichtung (224) beim Versetzen von der Zwischenposition in die Entleerungsposition eine Relativbewegung zueinander ausführen, sodass sich die Absaugeinrichtung (224) von dem Bereich um die Öffnung des Behälters (F) entfernt.

4. Anschlussvorrichtung (2) nach Anspruch 2 oder 3, ferner aufweisend:
eine von der Steuereinrichtung angesteuerte Deckelversetzeinrichtung (240), welche eingerichtet ist, einen den Behälter (F) verschließenden Deckel (D) derart zu versetzen, dass der Behälter (F) spätestens in der Zwischenposition in einem geöffneten Zustand vorliegt.

5. Anschlussvorrichtung (2) nach Anspruch 4, wobei
an der Halterungseinrichtung (220) eine Fixiereinrichtung (226) vorgesehen ist, welche eingerichtet ist, den Deckel (D) während des Versetzens an dem Behälter (F) zu fixieren.

6. Anschlussvorrichtung (2) nach Anspruch 4 oder 5, wobei
die Deckelversetzeinrichtung (240) eine Greifeinrichtung (242) aufweist, welche eingerichtet ist, den Deckel (D) in einer Greifposition zu greifen und den Deckel (D) greifend derart in einen versetzten Zustand zu versetzen, dass der Behälter (F) in dem geöffneten Zustand vorliegt.

7. Anschlussvorrichtung nach Anspruch 6, wobei
die Greifeinrichtung (242) eine Aufnahmeplatte (245) aufweist, welche eingerichtet ist, die Anschlussöffnung (120) des Isolators (1) in der Greifposition zu verschließen und bei Versetzen des Deckels (D) in den versetzten Zustand zum Einführen des Behälters (F) freizugeben.

8. Anschlussvorrichtung nach einem der Ansprüche 1 bis 7, wobei
die Steuereinrichtung eine Bedieneinrichtung mit einem Betätigungselement umfasst, welche erfordert, dass ein Bediener das Bedienelement beim Ansteuern der Versetzungseinrichtung (210, 230) kontinuierlich hält.

9. Anschlussvorrichtung (2) nach einem der Ansprüche 1 bis 8, ferner aufweisend
eine an der Anschlussöffnung (120), durch welche der Behälter (F) zum Entleeren bestimmungsgemäß in den Isolator eingeführt (F) wird, angeordnete Dichteinrichtung (250), welche eingerichtet ist, einen Spalt (S) zwischen der Anschlussöffnung (120) und dem Behälter (F) beim oder nach Einführen des Behälters (F) derart abzudichten, dass ein Austreten des pulver-/granulatförmigen Produkts aus dem Isolator (1) während des Entleerens verhindert wird.

10. Isolator (1) aufweisend eine Anschlussvorrichtung (2) nach einem der Ansprüche 1 bis 9.

11. Verfahren zum Anschließen eines ein pulver-/granulatförmiges Produkt enthaltenden Behälters (F) an einen Isolator (1) mit einer Anschlussöffnung (120), durch welche der Behälter (F) zum Entleeren bestimmungsgemäß in den Isolator (1) eingeführt wird, aufweisend die folgenden Schritte:
Aufnehmen und Halten des Behälters (F) in einer anfänglichen Halterungsposition;
Versetzen des Behälters (F) von der anfänglichen Halterungsposition in eine Zwischenposition, wobei ein Bereich um die Öffnung des Behälters derart abgesaugt wird, dass ein Austreten des pulver-/granulatförmigen Produkts während des Versetzens verhindert wird;
Versetzen des Behälters (F) von der Zwischenposition in eine Entleerungsposition derart, dass zumindest die Öffnung des Behälters in den Isolator (1) eingeführt wird, wobei ein Spalt (S) zwischen dem Behälter und der Anschlussöffnung derart abgedichtet wird, dass ein Austreten des pulver-/granulatförmigen Produkts aus dem Isolator verhindert wird.
